# EUROPÄISCHE PATENTSCHRIFT

(11) **EP 0 510 554 B1**
(45) Veröffentlichungstag und Bekanntmachung des Hinweises auf die Patenterteilung: **08.03.1995**
(21) Anmeldenummer: 92106721.1
(22) Anmeldetag: 18.04.1992
(51) Int. Cl.: B65G 1/02

(54) **Vorrichtung zum Lagern und/oder Fördern von Gegenständen**
Storing and/or conveying device for articles
Dispositif pour enmagasiner et/ou transporter des articles

(30) Priorität: 25.04.1991 DE 4113486
(43) Veröffentlichungstag der Anmeldung: 28.10.1992
(73) Patentinhaber: NIEROS HEINRICH NIEDERBERGER KG, 83661 Lenggries (DE)
(72) Erfinder: Niederberger, Heinrich, W-8172 Lenggries (DE)
(74) Vertreter: Sasse, Volker, Dipl.-Ing.

(56) Entgegenhaltungen:
- FR-A- 2 054 596
- FR-A- 2 283 644

## Beschreibung

Die Erfindung betrifft eine Vorrichtung der im Oberbegriff des Patentanspruches 1 angegebenen Art (siehe zum Beispiel die FR-A-2 283 644).

Solche Vorrichtungen werden beispielsweise als sogenannte Durchlaufregale verwendet, um Behälter einer vorbestimmten Maximalgröße zu lagern. In jeder Etage durchsetzt eine Rollenbahn das Durchlaufregal. Bei größeren Durchlaufregalen sind in jeder Etage mehrere nebeneinanderliegende Rollenbahnen vorgesehen. Die Auflast jeder Rollenbahn und der darauf liegenden Gegenstände wird von den Tragprofilen auf die Steher- bzw. das Regalgerüst übertragen. Bei bekannten Vorrichtungen dieser Art verlaufen die Tragprofile jeweils unterhalb der Rollenprofile. Da oberhalb jedes Gegenstandes ein bestimmter Sicherheitsabstand zum ungehinderten Manipulieren eingehalten werden muß, sind wegen der Tragprofile die einzelnen Etagen in Hochrichtung relativ weit beabstandet. Die Aufnahmekapazität, gerade in Hochrichtung, der Vorrichtung läßt sich deshalb bei gegebenem Platzangebot für die Vorrichtung nur ungenügend für die Gegenstände nutzen.

Der Erfindung liegt die Aufgabe zugrunde, eine Vorrichtung der eingangs genannten Art mit erhöhter Aufnahmekapazität für Gegenstände zu schaffen.

Die gestellte Aufgabe wird erfindungsgemäß bei einer Vorrichtung der im Oberbegriff des Anspruches 1 angegebenen Art mit den im kennzeichnenden Teil erläuterten Merkmalen gelöst.

Da die Tragprofile jeweils innerhalb der Höhenerstreckung der Rollenprofile angeordnet sind, lassen sich die einzelnen Etagen näher zueinander setzen, wodurch bei gegebenem Platzangebot die Aufnahmekapazität der Vorrichtung erhöht wird. Es wird für die Tragprofile der ohnedies für die Rollenbahnen notwendige Freiraum gewinnbringend ausgenutzt. Die Auflast der Rollenbahnen und der darauf liegenden Gegenstände wird direkt innerhalb der Rollenprofile an die Tragprofile übertragen und an die Steher- bzw. das Regalgerüst weitergeleitet.

Bei der zweckmäßigen Ausführungsform gemäß Anspruch 2 wird der für die Rollen der Rollenbahnen notwendige Freiraum zum Unterbringen der Tragprofile genutzt. Die Hochabstände zwischen den Rollenbahnen der übereinander liegenden Etagen sind im Hinblick auf eine optimale Nutzung der Aufnahmekapazität außerordentlich kurz.

Zweckmäßig ist ferner die Ausführungsform gemäß Anspruch 3. Da die Unterseiten der Tragprofile in etwa mit den Unterseiten der Rollen fluchten, werden bei einer unbeabsichtigten Kollision zwischen einem Gegenstand auf einer darunterliegenden Rollenbahn und der Rollenbahn der darüberliegenden Etage die Rollen nicht beschädigt, weil die Tragprofile als Abweiser fungieren.

Ein hochbelastbarer und statisch tragfähiger Verbund ergibt sich bei der Ausführungsform gemäß Anspruch 4. Die lösbare Festlegung der Rollenprofile an den Tragprofilen ist montagetechnisch vorteilhaft.

Eine besonders zweckmäßige Ausführungsform mit eigenständigem erfinderischem Gehalt geht aus Anspruch 5 hervor. Bei bekannten Vorrichtungen dieser Art werden nämlich die Rollenprofile in Doppelanordnung nebeneinanderliegend, gegebenenfalls sogar mit einem dazwischengesetzten Steher, angeordnet. Dadurch wird in Querrichtung Platz vergeudet. Durch die Verwendung jeweils eines gemeinsamen Rollenprofils für zwei nebeneinanderliegende Rollenbahnen und auch durch das Weglassen eines Stehers zwischen benachbarten Rollenbahnen ergibt sich eine bessere Nutzung der Aufnahmekapazität der Vorrichtung.

Im Hinblick darauf ist auch die Ausführungsform gemäß Anspruch 5 vorteilhaft, bei der der Abweiserkanal des Rollenprofils an beiden Seiten dafür sorgt, daß sich entlang der Rollenbahn bewegende Gegenstände auf der Rollenbahn seitlich geführt werden und mit keinen Gegenständen auf der benachbarten Rollenbahn kollidieren. Der Abweiserkanal erhöht zudem die Biegefestigkeit des Rollenprofils.

Baulich und montagetechnisch ist die Ausführungsform gemäß Anspruch 7 zweckmäßig. Es wird dabei für eine unmittelbare Kraftübertragung von den Rollenprofilen auf das Tragprofil Sorge getragen. Bei der Montage brauchen die Rollenprofile nur auf die Tragprofile aufgefädelt und festgelegt zu werden. Eine Verstärkung der Auflageflächen vermeidet lokale Belastungskonzentrationen zwischen den Rollenprofilen und den Tragprofilen. Der Austausch beschädigter Rollen ist einfach.

Eine besonders steife und trotzdem platzsparende Konstruktion des Rollenprofils geht aus Anspruch 8 hervor.

Bei der Ausbildung gemäß Anspruch 9 ist das Tragprofil trotz kleiner Abmessungen hoch belastbar. Es hat sowohl in Hoch- als auch in Querrichtung ein günstig hohes Widerstandsmoment. Über die Querstege findet eine wirksame Kraftübertragung von den Rollenprofilen auf das Tragprofil statt.

Bei der Ausführungsform gemäß Anspruch 10 ergibt sich eine einfach herstellbare und hochbelastbare Verbindung zwischen den Rollenprofilen und den Tragprofilen. Die Rollenprofile sind sauber positioniert und ausgerichtet auf den Tragprofilen festgelegt.

Montagetechnisch ist die Ausführungsform gemäß Anspruch 11 vorteilhaft, weil sich die einzelnen, vorgefertigten oder am Aufstellungsort zusammengesetzten Etagen leicht in das Regalgerüst eingliedern und einjustieren lassen. Dies ist im Hinblick darauf von Vorteil, daß die Rollenbahnen üblicherweise mit einer bestimmten Schräge eingebaut werden, um die Durchlaufbewegung der Gegenstände durch die Vorrichtung mit Schwerkraft zu unterstützen.

Eine weitere, vorteilhafte Ausführungsform geht aus Anspruch 12 hervor. Dies ist eine besonders einfache, funktionssichere und leichtgewichtige Konzeption der Rollenbahnen. Die Rollen werden stirnseitig von Lagerbuchsen frei drehbar gehalten, die wiederum senkrecht abstehend am Hochsteg des Rollenprofils mit Befestigungsschrauben festgelegt sind. Die zwischen den Rollenprofilen verlaufenden Teile der Tragprofile fungieren neben ihrer Trageigenschaft auch als Abstandshalter und stellen sicher, daß die auf den Lagerbuchsen gehaltenen Rollen frei drehen können und nicht abspringen. Der Rollen-Austausch ist einfach, indem die Befestigungsschraube der Lagerbuchse auf jeder Rollenseite herausgedreht wird.

Die Vorrichtung läßt sich kostengünstig aus wenigen handelsüblichen und kostengünstig erhältlichen Teilen zusammensetzen, sofern die Voraussetzungen gemäß Anspruch 13 gegeben sind.

Ein besonderes Kennzeichen der Ausführungsform gemäß Anspruch 14 ist eine optimale Ausnutzung der Aufnahmekapazität der Vorrichtung durch dicht übereinandergesetzte Etagen.

Anhand der Zeichnung wird eine beispielhafte Ausführungsform des Erfindungsgegenstandes erläutert.

Es zeigen:
- Figur 1: ein Durchlaufregal mit zwei Etagen, in einer schematischen Perspektiv-Darstellung,
- Figur 2: ein Durchlaufregal mit zwei Etagen und jeweils mehreren Rollenbahnen in jeder Etage, in einer schematischen Perspektiv-Darstellung,
- Figur 3: einen Ausschnitt aus dem Durchlaufregal von Figur 2, in etwa in Blickrichtung III-III in Figur 2,
- Figur 4: einen Querschnitt eines Teils des Durchlaufregals von Figur 2 in einer Ebene IV-IV von Figur 5,
- Figur 5: einen Längsschnitt in der Ebene V-V von Figur 4 und
- Figur 6: eine Detailansicht zu den Figuren 2 und 3.

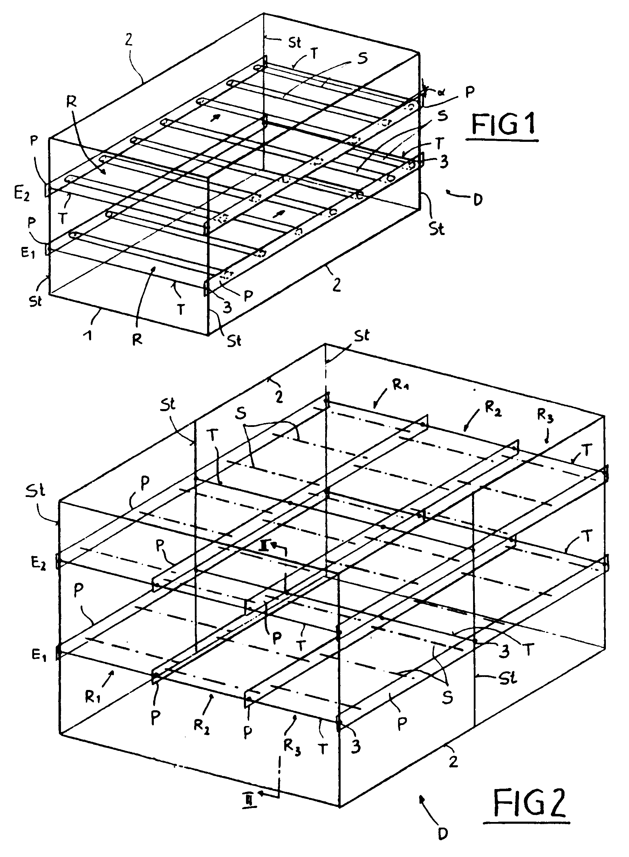

Ein Durchlaufregal D gemäß Figur 1 besteht aus einem Regalgerüst 1 mit vertikalen Stehern St in den vier Eckbereichen. Im Regalgerüst 1 sind zwei übereinanderliegende Etagen E₁ und E₂ mit Rollenbahnen R ausgebildet, die sich in Längsrichtung durch das Durchlaufregal D erstrecken und annähernd zueinander parallel sind. Jede Rollenbahn R ist unter einem kleinen Winkel α gegenüber der Horizontalen geneigt, so daß auf den Rollenbahnen abgelegte Gegenstände unter Schwerkrafteinfluß leicht in Pfeilrichtung bewegbar sind. Die in Figur 1 nicht gezeigten Gegenstände werden z.B. von der linken Seite auf die jeweilige Rollenbahn R aufgelegt und in Pfeilrichtung durch das Regal geschoben und bei Bedarf an der anderen Seite wieder entnommen.

Jede Rollenbahn R besteht aus zwei seitlichen Rollenprofilen P, die hochkant angeordnet sind, und aus dazwischen und zueinander parallel verlaufenden Rollen S, die frei drehbar sind. Die Rollen S sind in den Rollenprofilen P drehbar abgestützt. Vordere und hintere Tragprofile T durchsetzen die Rollenprofile P und sind in Befestigungsbereichen 3 an den Stehern St oder an Streben 2 des Regalgerüsts 1 befestigt. Die Tragprofile T übertragen die Auflast von den Rollenbahnen R auf das Regalgerüst 1. In dem Durchlaufregal D gemäß Figur 1 können auch mehr als zwei Etagen vorgesehen sein. Die Hochabstände zwischen den Etagen richten sich nach der Größe der einzubringenden Gegenstände.

Bei dem Durchlaufregal D gemäß Figur 2 ist grundsätzlich der gleiche Aufbau des Regalgerüstes 1 wie beim Durchlaufregal gemäß Figur 1 gegeben. Jedoch sind in den zumindest zwei Etagen E₁ und E₂ des Durchlaufregals D von Figur 2 jeweils drei nebeneinanderliegende Rollenbahnen R₁, R₂, R₃ vorgesehen. Die Tragprofile T durchsetzen die Rollenprofile P aller drei Rollenbahnen und sind in Befestigungsbereichen 3 an den Stehern St verankert. In jeder Rollenbahn sind die Rollen S zwischen den Rollenprofilen P abgestützt und gelagert. Jeweils zwei benachbarte Rollenbahnen weisen ein gemeinsames Rollenprofil P auf, in dem die Rollen S zueinander versetzt abgestützt sind. Zwischen den in den Ecken des Regalgerüsts 1 angeordneten Stehern St sind zur Erhöhung der Gestaltfestigkeit weitere Steher St angeordnet, zwischen denen sich weitere Tragprofile T für die Rollenbahnen erstrecken.

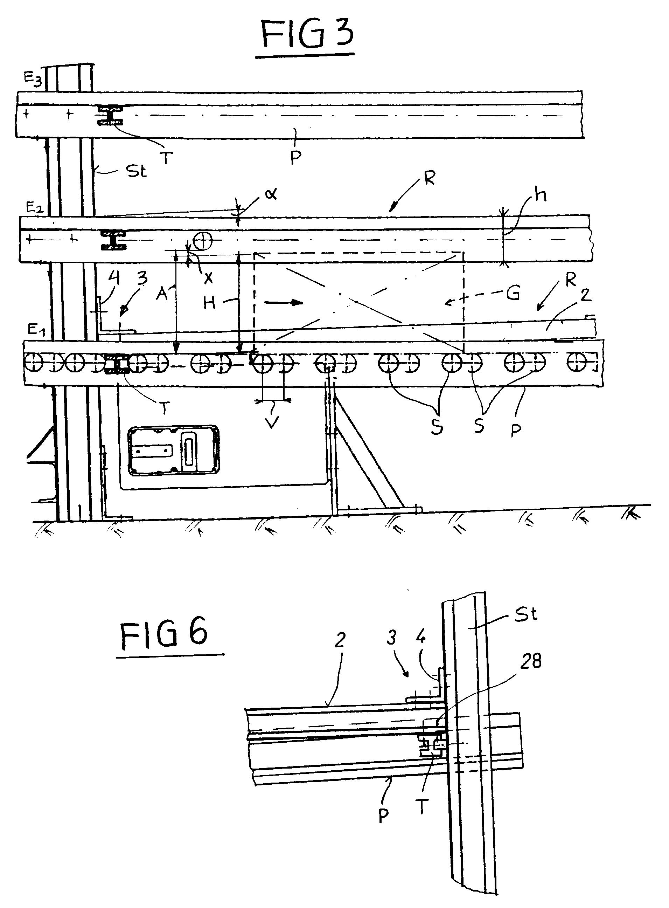

Die Detailausbildung der Durchlaufregale D der Figuren 1 und 2 ist aus den Figuren 3 bis 6 erkennbar.

In der Seiten-Schnittansicht gemäß Figur 3 zeigen sich drei mit annähernd gleichen Abständen übereinander angeordnete Etagen E₁, E₂ und E₃. Die Steher St stehen annähernd senkrecht. Die Rollenbahnen R fallen von links nach rechts mit dem Winkel α. Die Tragproflle T sind in den Befestigungsbereichen 3 an mit Befestigungselementen 4 an den Stehern St festgelegten Streben 2 verankert oder mit Befestigungselementen 4 direkt an den Stehern St. Die Rollen S der vor der Zeichnungsebene liegenden Rollenbahnen sind gegenüber den Rollen der hinter der Zeichnungsebene liegenden Rollenbahnen um ein Maß V versetzt. Die Tragprofile durchsetzen die Rollenprofile P jeweils zwischen zwei Rollen S. Die Tragprofile T liegen innerhalb der Hocherstreckung der Rollen S.

Ein auf der unteren Etage E₁ abgelegter Gegenstand G, z.B. ein Behälter, hat eine bestimmte maximale Höhe H. Der Abstand A zwischen der Unterseite der Rollen S in der Etage E₂ und der Oberseite der Rollen S in der darunterliegenden Etage E₁ ist nur um einen geringen Sicherheitsabstand x größer als die Gegenstandshöhe H.

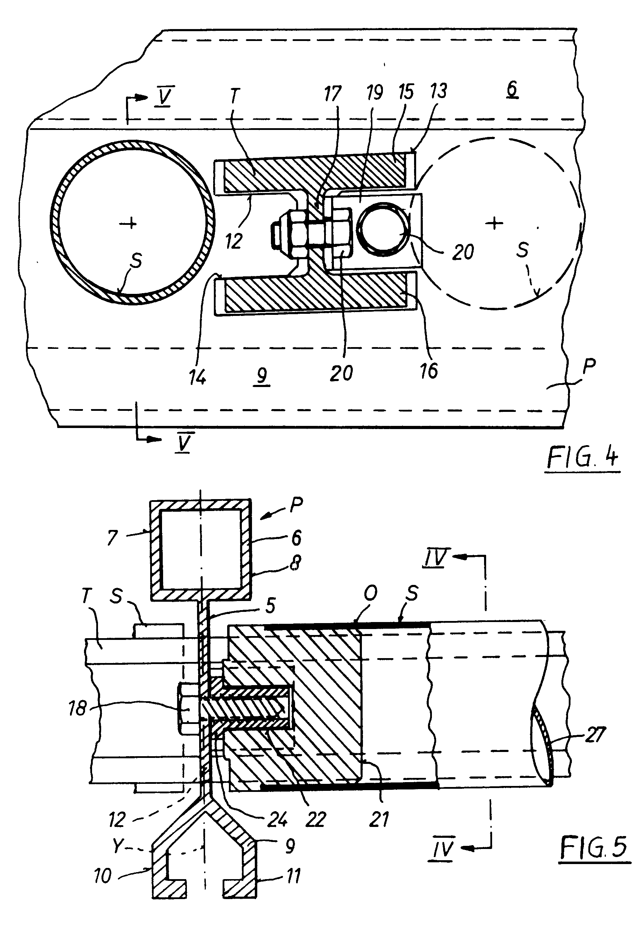

Gemäß den Figuren 4 und 5 ist jedes Rollenprofil P bezüglich seiner Hochachse Y symmetrisch ausgebildet. Es weist einen mittleren Hochsteg 5 auf, an dem oben ein Abweiserkanal 6 mit quadratischem Hohlquerschnitt angeordnet ist, der seitliche Abweiserflächen 7 und 8 für die Gegenstände auf den Rollen S hat. Am unteren Ende des Hochsteges 5 ist ein weiterer beidseitiger Abweiserkanal 9 angebracht, der beidseitige Abweiserflächen 10 und 11 zeigt. Der untere Abweiserkanal 9 ist nach unten offen, so daß hier ggfs. Halfenschrauben, Stromleitungen oder andere Komponenten des Durchlaufregals untergebracht werden können. Das Rollenprofil P ist zweckmäßigerweise ein einstückiges stranggepreßtes Leichtmetallprofil.

Im Hochsteg 5 ist für jedes Tragprofil T ein Ausschnitt 12 mit Auflageflächen 13 und 14 vorgesehen, durch den das Tragprofil T hindurchgeschoben ist. Das Tragprofil T Ist als I-Profil mit einem oberen Quersteg 15, einem unteren Quersteg 16 und einem mittigen Hochsteg 17 ausgebildet. Die Querstege 15 und 16 sind dicker als der Hochsteg 17. Sie liegen an den Auflageflächen 13 und 14 an. Am Hochsteg 17 liegt ein winkelförmiges Befestigungsteil 19 an, das durch eine Schraube 20 festgelegt ist. Der Hochsteg 5 des Rollenprofils P ist wiederum mit einer Schraube 20 am Befestigungsteil 19 festgelegt.

Jede Rolle S weist einen rohrförmigen Rollenmantel 27 auf, in dessen Enden Rollenkerne 21 eingesteckt sind. Jeder Rollenkern 21 enthält eine Lagerbohrung 22, in die eine Lagerbuchse 24 derart greift, daß die Rolle S darauf frei drehbar gelagert ist. Die Lagerbuchse 24 wird von einer den Hochsteg 5 des Rollenprofils P durchsetzenden Befestigungsschraube 18 am Hochsteg 5 festgelegt. Hinter der Lagerbuchse 24 ist eine Schraube 20 vorgesehen, die besser aus Figur 4 zu entnehmen ist, mit der das Befestigungsteil 19 am Hochsteg 5 festgelegt ist. Die in Figur 5 angedeutete, linke Rolle S ist auf die gleiche Weise am Hochsteg 5 desselben Rollenprofils P abgestützt und gelagert, wobei das Gegenlager im nächsten Hochsteg zu finden ist.

Gemäß Figur 6 ist im Befestigungsbereich 3 am Steher St ein winkelförmiges Befestigungselement 4 angebracht, an dem die Strebe 2 befestigt ist. Das aus dem Rollenprofil P austretende Ende des Tragprofiles T ist bei 28 (Befestigungsschrauben) an der Strebe 2 verankert. Sofern keine Strebe 2 im Befestigungsbereich vorhanden ist, können die Enden der Tragprofile T direkt mit Befestigungselementen am Steher St verankert werden. Es wäre auch denkbar, die Enden der Tragprofile T direkt in entsprechende Ausschnitte der Steher St einzustecken und zu sichern.

Aus Figur 5 ist erkennbar, daß jede Rolle S mit ihrer Oberseite O bis unter die Abweiserfläche 7, 8 des Abweiserkanals 6 greift. Damit ist sichergestellt, daß auf den Rollen S liegende Gegenstände nicht aus Versehen über die Rollenenden gelangen.

Die die Rollenprofile P durchsetzenden Tragprofile T könnten auch für ein Durchlaufregal verwendet werden, bei dem jede Rollenbahn R zwei eigene Rollenprofile aufweist, zwischen denen ggfs. sogar ein Steher des Regalgerüstes angeordnet ist. Die Tragprofile T könnten dann auch in diesem Bereich zwischen den benachbarten Rollenbahnen R an den Stehern St verankert sein.

## Patentansprüche

1. Vorrichtung zum Lagern und/oder Fördern von Gegenständen, insbesondere Durchlaufregal oder Lager für Behälter oder prismenförmige Gegenstände, mit einem mehrere Steher aufweisenden Regalgerüst, in dem in wenigstens einer Etage zumindest eine Rollenbahn angeordnet ist, die aus zwei seitlichen, längsverlaufenden Rollenprofilen und sich zwischen den Rollenprofilen quer erstreckenden, an den Rollenprofilen abgestützten Rollen besteht, und mit an den Stehern gehaltenen, quer zu den Rollenprofilen liegenden Tragprofilen für die Rollenprofile einer Etage, dadurch gekennzeichnet, daß jedes Tragprofil (T) innerhalb der Höhenerstreckung (h) der Rollenprofile (P) angeordnet ist, die Rollenprofile (P) quer durchsetzt und sie im Durchsetzungsbereich abstützt.

2. Vorrichtung nach Anspruch 1, dadurch gekennzeichnet, daß das Tragprofil (T) zwischen zwei in Bewegungsrichtung eines Gegenstandes (G) auf der Rollenbahn (R, R₁, R₂, R₃) benachbarten Rollen (S) und annähernd in Höhe der Rollenachsen angeordnet ist, und daß die Oberseiten der Rollen (S) geringfügig oberhalb der Oberseite des Tragprofils (T) liegen.

3. Vorrichtung nach Anspruch 2, dadurch gekennzeichnet, daß die Unterseite des Tragprofils (T) in etwa mit den Unterseiten der Rollen (S) fluchtet.

4. Vorrichtung nach Anspruch 1, dadurch gekennzeichnet, daß jedes Rollenprofil (P) an dem Tragprofil (T), vorzugsweise lösbar, festgelegt ist.

5. Vorrichtung nach Anspruch 1, dadurch gekennzeichnet, daß zwei benachbarten Rollenbahnen (R₁, R₂, R₃) einer Etage (E₁, E₂, E₃) ein gemeinsames und vom Tragprofil (T) durchsetztes Rollenprofil (P) aufweisen, an dem die Rollen (S) bei den Rollenbahnen abgestützt sind, und daß die Rollen (S) der einen Rollenbahn (R₁, R₂, R₃) in Bewegungsrichtung der Gegenstände (G) auf den Rollenbahnen gegenüber den Rollen (S) der anderen Rollenbahn versetzt (Versetzung V) sind.

6. Vorrichtung nach einem der Ansprüche 1 bis 5, dadurch gekennzeichnet, daß das Rollenprofil (P) bezüglich seiner Hochachse (Y) symmetrisch ausgebildet ist und zumindest einen obenliegenden, beidseitig wirkenden Abweiserkanal (6) aufweist.

7. Vorrichtung nach Anspruch 1, dadurch gekennzeichnet, daß das Rollenprofil (P) einen Ausschnitt (12) für das Tragprofil (T) aufweist, und daß in dem Ausschnitt (12) wenigstens eine, ggfs. verstärkte, Auflagefläche (13, 14) für das Tragprofil (T) vorgesehen ist.

8. Vorrichtung nach den Ansprüchen 6 und 7, dadurch gekennzeichnet, daß das Rollenprofil (P) einen vertikalen Hochsteg (5) besitzt, an dem oben der Abweiserkanal (6) und unten ein weiterer Abweiserkanal (9) angeordnet sind, und daß der Ausschnitt (12) im Hochsteg (5) zwischen den Abweiserkanälen (6, 9) vorgesehen ist.

9. Vorrichtung nach einem der Ansprüche 1 bis 8, dadurch gekennzeichnet, daß das Tragprofil (T) ein I-Profil mit waagerechten Querstegen (15, 16) und einem mittigen Hochsteg (17) ist, und daß zumindest ein Quersteg (15, 16) an einer Auflagefläche (13, 14) des Ausschnitts (12) anliegt.

10. Vorrichtung nach den Ansprüchen 1 und 2, dadurch gekennzeichnet, daß am Hochsteg (17) des Tragprofils (T) ein Befestigungsteil (19), z.B. ein Winkel, angebracht ist, an dem der Hochsteg (5) des Rollenprofils (P) befestigt Ist.

11. Vorrichtung nach Anspruch 1, dadurch gekennzeichnet, daß an den Stehern bzw. an die Steher (St) verbindenden Streben (2) Befestigungselemente (4) für das Tragprofil (T) vorgesehen sind.

12. Vorrichtung nach Anspruch 8, dadurch gekennzeichnet, daß am Hochsteg (5) des Rollenprofils (P) mittels Befestigungsschrauben (18) senkrecht abstehende Lagerbuchsen (24) für die Rollen (S) festgelegt sind, die stirnseitig in eine zentrale Lagerbohrung (22) eines jeden Rollenendes eingreifen und die Rolle (S) drehbar halten, und daß der zwischen zwei Rollenprofilen (P) liegende Teil jedes Tragprofils (T) mit seinen Befestigungsteilen (19, 20) als Abstandshalter für die frei drehbaren Rollen (S) ausgebildet ist.

13. Vorrichtung nach den Ansprüchen 1 bis 12, dadurch gekennzeichnet, daß die Steher (St), die Tragprofile (T) und die Rollenprofile (P) extrudierte Leichtmetallprofile sind.

14. Vorrichtung nach den Ansprüchen 1 bis 13, dadurch gekennzeichnet, daß der vertikale Abstand (A) zwischen den Oberseiten (O) der Rollen (S) einer Etage (E₁, E₂, E₃) und den Unterseiten der Rollen (S) der darüberliegenden Etage der Gegenstandshöhe (H) zuzüglich eines Sicherheitsabstandes (x) entspricht.

## Claims

1. A device for storing and/or conveying articles, in particular a flow shelf or storage means for containers or prismatic articles, with a shelf structure having several posts, wherein there is arranged, on at least one level, at least one roller track which consists of two lateral roller sections extending in the longitudinal direction and rollers extending transversely between the roller sections and supported on the roller sections, and with supporting sections secured on the posts and disposed transversely to the roller sections for the roller sections of one level; characterized in that each supporting section (T) is arranged within the vertical reach (h) of the roller sections (P), passes transversely through the roller sections (P), and supports them in the traversing zone.

2. A device according to claim 1, characterized in that the supporting section (T) is arranged between two rollers (S) which are adjacent in the direction of movement of an article (G) on the roller track (R, R₁, R₂, R₃) and approximately at the level of the roller axes; and that the tops of the rollers (S) lie slightly above the top of the supporting section (T).

3. A device according to claim 2, characterized in that the bottom of the supporting section (T) is approximately aligned with the bottoms of the rollers (S).

4. A device according to claim 1, characterized in that each roller section (P) is secured, preferably detachably, on the supporting section (T).

5. A device according to claim 1, characterized in that two adjacent roller tracks (R, R₁, R₂, R₃) of one level (E₁, E₂, E₃) have a common roller section (P) which is traversed by the supporting section (T), on which roller section the rollers (S) are supported at the roller tracks; and that the rollers (S) of one roller track (R, R₁, R₂, R₃) are offset in the direction of movement of the articles (G) on the roller tracks relative to the rollers (S) of the other roller track (offset V).

6. A device according to one of claims 1 to 5 characterized in that the roller section (P) is designed symmetrically with respect to its vertical axis (Y) and has at least one top fender channel (6) which operates on both sides.

7. A device according to claim 1, characterized in that the roller section (P) has a cutout (12) for the supporting section (T); and that in the cutout (12) provision is made for at least one bearing surface (13, 14), reinforced if required, for the supporting section (T).

8. A yarn carrier according to claims 6 and 7, characterized in that the roller section (P) has a vertical high web (5), whereon the fender channel (6) is arranged at the top, and a further fender channel (9) at the bottom; and that the cutout (12) is provided in the vertical web (5) between the fender channels (6, 9).

9. A device according to one of claims 1 to 8, characterized in that the supporting section (T) is an I-section with horizontal flanges (15, 16) and a central vertical web (17); and that at least one flange (15, 16) bears on a bearing surface (13, 14) of the cutout (12).

10. A device according to claims 1 and 2, characterized in that a mounting component (18), for example an angle bracket, is attached to the vertical web (17) of the supporting section (T), on which component the vertical web (5) of the roller section (P) is secured.

11. A device according to claim 1, characterized in that on the posts, or the bars (2) connecting the posts (St), provision is made for fastening elements (4) for the supporting section (T).

12. A device according to claim 8, characterized in that on the vertical web (5) of the roller section (P), vertically projecting bearing bushes (24) for the rollers (S) are secured by means of fastening screws, which bushes engage at the end face in a central mounting bore (22) of each roller end and hold the rollers (S) for rotation; and that the part of each supporting section (T) lying between two roller sections (P) is formed with its mounting components (19, 20) as a spacer for the freely rotatable rollers (S).

13. A device according to claims 1 to 12, characterized in that the posts (St), the supporting sections (T), and the roller sections (P) are extruded light metal sections.

14. A device according to claims 1 to 13, characterized in that the vertical distance (A) between the tops (O) of the rollers (S) of one level (E₁, E₂, E₃) and the bottoms of the rollers (S) of the level lying on top thereof corresponds to the height (H) of the articles plus a safety clearance (x).

## Revendications

1. Dispositif pour emmagasiner et/ou transporter des articles, un couloir de roulement notamment ou un stockage pour conteneurs ou articles prismatiques, avec une ossature de rayonnages comportant plusieurs montants verticaux, dans laquelle est disposé un transporteur à rouleaux, au moins, dans un étage, au moins, ce transporteur se composant de profilés de rouleaux longitudinaux et latéraux, et de rouleaux s'étendant à la transversale des profilés de rouleaux et supportés sur ces derniers, et avec des profilés porteurs pour les profilés de rouleaux d'un étage, maintenus sur les montants verticaux et situés à la transversale des profilés de rouleaux, caractérisé en ce que chaque profilé porteur (T) est disposé dans l'étendue en hauteur (h) des profilés de rouleaux (P), passe dans le sens transversal au travers des profilés (P), et les supporte dans la zone de traversée.

2. Dispositif suivant la revendication 1, caractérisé en ce que chaque profilé porteur (T) est disposé entre deux rouleaux (S) adjacents sur le transporteur à rouleaux (R, R1, R2, R3), dans le sens de mouvement d'un article (G), et à peu près au niveau des axes des rouleaux, et en ce que les faces supérieures des rouleaux (S) se situent légèrement au-dessus de la face supérieure du profilé porteur (T).

3. Dispositif suivant la revendication 2, caractérisé en ce que la face inférieure du profilé porteur (T) affleure à peu près avec les faces inférieures des rouleaux (S).

4. Dispositif suivant la revendication 1, caractérisé en ce que chaque profilé de rouleaux (P) est fixé sur le profilé porteur (T), d'une manière amovible de préférence.

5. Dispositif suivant la revendication 1, caractérisé en ce que deux transporteurs à rouleaux (R1, R2, R3) adjacents d'un étage (E1, E2, E3) présentent un profilé de rouleaux (P) commun, traversé par le profilé porteur (T), et sur lequel sont supportés les rouleaux (S) des transporteurs, et en ce que les rouleaux (S) de l'un des transporteurs (R1, R2, R3) sont en déport (V) par rapport aux rouleaux (S) de l'autre transporteur, dans le sens de mouvement des articles (G) sur les transporteurs à rouleaux.

6. Dispositif suivant l'une quelconque des revendications 1 à 5, caractérisé en ce que le profilé de rouleaux (P) a une réalisation symétrique par rapport à son axe vertical (Y), et présente au moins un conduit de butée (6), supérieur, agissant bilatéralement.

7. Dispositif suivant la revendication 1, caractérisé en ce que le profilé de rouleaux (P) présente une découpe (12) pour le profilé porteur (T), et en ce qu'une surface d'appui (13, 14) au moins, éventuellement renforcée, est prévue dans la découpe (12) pour le profilé porteur (T).

8. Dispositif suivant les revendications 6 et 7, caractérisé en ce que le profilé de rouleaux (P) présente une traverse verticale (5), avec le conduit de butée (6) en partie haute et un autre conduit de butée (9) en partie basse, et en ce que la découpe (12) est prévue dans la traverse verticale (5), entre les conduits de butée (6, 9).

9. Dispositif suivant l'une quelconque des revendications 1 à 8, caractérisé en ce que le profilé porteur (T) est un profilé en I, avec des profils transversaux horizontaux (15, 16) et une traverse verticale centrale (17), et en ce qu'un profil transversal (15, 16), au moins, s'applique sur une surface d'appui (13, 14) de la découpe (12).

10. Dispositif suivant les revendications 1 et 2, caractérisé en ce qu'un élément de fixation (19), une cornière par exemple, sur lequel est fixée la traverse verticale (5) du profilé de rouleaux (P), est prévu sur la traverse verticale (17) du profilé porteur (T).

11. Dispositif suivant la revendication 1, caractérisé en ce que des éléments de fixation (4) pour le profilé porteur (T) sont prévus sur les montants verticaux et/ou sur les entre-toises (2) assemblant les montants (St).

12. Dispositif suivant la revendication 8, caractérisé en ce que des coussinets (24), en saillie perpendiculaire, sont fixés pour les rouleaux (S) sur la traverse verticale (5) du profilé de rouleaux (P), au moyen de vis de fixation (18), ces coussinets s'engegeant côté frontal dans un alésage central (22) de chaque extrémité de rouleau, et maintenant le rouleau (S) avec une possibilité de rotation, et en ce que la section de chaque profilé porteur (T), située entre deux profilés de rouleaux (P), avec ses éléments de fixation (19, 20), est réalisée sous forme d'écarteur pour les rouleaux (S) librement rotatifs.

13. Dispositif suivant les revendications 1 à 12, caractérisé en ce que les montants verticaux (St), les profilés porteurs (T), et les profilés de rouleaux (P), sont des profilés extrudés en alliage léger.

14. Dispositif suivant les revendications 1 à 13, caractérisé en ce que la distance verticale (A) entre les faces supérieures (O) des rouleaux (S) d'un étage (E1, E2, E3) et les faces inférieures des rouleaux (S) de l'étage sus-jacent correspond à la hauteur (H) des articles, plus une distance de sécurité (x).
